# EUROPÄISCHE PATENTANMELDUNG

(11) **EP 2 365 296 A1**
(43) Veröffentlichungstag der Anmeldung: **14.09.2011**
(21) Anmeldenummer: 10010810.9
(22) Anmeldetag: 27.09.2010
(51) Int. Cl.: G01F 5/00

(54) **Durchflussmengenmessapparatur für Flüssigkeiten**

(30) Priorität: 23.12.2009 DE 102009060516
(71) Anmelder: Gebr. Kemper GmbH + Co. KG Metallwerke, 57462 Olpe (DE)
(72) Erfinder: Blumenthal, Roland, 50374 Erftstadt (DE); Thelle, Tobias, 57489 Drohlshagen (DE)
(74) Vertreter: Grünecker, Kinkeldey, Stockmair & Schwanhäusser Anwaltssozietät

(57) **Zusammenfassung**

Die Erfindung betrifft eine Durchflussmengenmessapparatur (1) mit einem Durchflussmengensensor (2), einem Einlass (10) und einem Auslass (12). Um die Durchflussmenge einer Flüssigkeitsströmung auch dann zu erfassen, wenn diese Durchflussmenge jenseits des Messbereichs des Durchflussmengensensors (2) liegt, ist erfindungsgemäß ein erster Flüssigkeitskanal (6) und ein zweiter Flüssigkeitskanal (8) vorgesehen, die zu einem Rohrleitungsmodul zusammengefasst sind. Der Durchflussmengensensor (2) ist am zweiten Flüssigkeitskanal (8) angebracht. Die Strömungsquerschnitte (Q) der Flüssigkeitskanäle (6, 8) sind bevorzugt größer als ein Kapillarquerschnitt, so dass sich in den Flüssigkeitskanälen keine Kapillarströmung ausbildet.

## Beschreibung

Die Erfindung betrifft eine Durchflussmengenmessapparatur mit einem Durchflussmengensensor.

Im praktischen Einsatz, insbesondere im Bereich der Gebäudewasserversorgung, erweist sich bei Durchflussmengensensoren oft deren begrenzter Messbereich als nachteilig. Grundsätzlich kann vom jeweils eingesetzten Sensor nur ein begrenzter Bereich von Durchflussmengen mit der für einen bestimmten Einsatz erforderlichen Genauigkeit gemessen werden.

Für Messaufgaben außerhalb des Messbereichs muss entweder ein Sensor gleichen Typs mit einem entsprechend anderen Messbereich benutzt werden oder es muss, falls mit diesem Typ der andere Messbereich bauartbedingt nicht erfasst werden kann, das Messprinzip des Sensors gewechselt werden. Dies erfordert jedoch oft eine Neukonstruktion der gesamten Apparatur.

Gerade bei größeren Durchflussmengen gibt es nur wenige Sensortypen, die mit hoher Genauigkeit arbeiten. Dies mag daran liegen, dass besonders hohe Volumenströme in der Praxis nur selten auftreten und den wirtschaftlichen Aufwand für die Neuentwicklung oder Verbesserung von Sensoren, die in diesem Messbereich arbeiten, nicht rechtfertigen.

Der Erfindung liegt folglich die Aufgabe zugrunde, eine einfache und kompakte Durchflussmengenmessapparatur zu schaffen, mit der Durchflussmengen einer Flüssigkeitsströmung erfasst werden können, die jenseits des Messbereichs des jeweils eingesetzten Sensors liegen.

Diese Aufgabe wird erfindungsgemäß für eine Durchflussmengenmessapparatur der eingangs genannten Art dadurch gelöst, dass wenigstens ein erster Flüssigkeitskanal und wenigstens ein zweiter Flüssigkeitskanal, an dem der Durchflussmengensensor angebracht ist, zu einem gemeinsamen Rohrleitungsmodul zusammengefasst sind.

Mit dieser einfachen Lösung ist es möglich, die Durchflussmengen von Flüssigkeiten auch dann noch genau zu erfassen, wenn sie jenseits des Messbereichs des eingesetzten Durchflussmengensensors liegen,

Gemäß dem erfindungsgemäß beanspruchten Verfahren wird dies dadurch erreicht, dass der Flüssigkeitsstrom unterteilt und die Durchflussmenge eines Teilstroms bestimmt wird. Die Durchflussmenge eines Teilstroms ist geringer als die Durchflussmenge des Gesamtstromes und kann so an den Messbereich des verwendeten Durchflussmengensensors angepasst werden.

Das Prinzip, eine Strömung in Teilströme aufzuteilen und die Durchflussmenge nur eines Teilstromes zu messen, ist nur zur Erfassung der Durchflussmengen von Gasen, nicht aber von Flüssigkeiten bekannt: Auf dem Markt sind Geräte mit den eingangs genannten Merkmalen zur Regelung der Durchflussmengen von Gasen verfügbar. Die Firma Plasma-Parylene Systems GmbH stellt ein solches System als Bestandteil eines Massendurchflussreglers für Gase zur Verfügung. Von der Firma Christian Bürkert GmbH und Co. KG ist ebenfalls ein Gerät bekannt, das unter dem Namen "Mass Flow Meter (MFM)" vertrieben wird und zur Erfassung der Durchflussmengen von Gasen eingesetzt wird. Schließlich ist eine weitere Apparatur derselben Bauart von der Firma Advanced Energy bekannt. Auch dieses System ist Bestandteil eines geschlossenen Regelkreises, mit dem die Durchflussmengen von Gasen oder Flüssigkeiten festgesetzt, gemessen und geregelt werden können. Zur Bestimmung der Durchflussmenge einer Flüssigkeit muss diese zunächst verdampft werden.

Die oben beschriebenen, vorbekannten Systeme leiten jeweils einen Teilstrom der Gasströmung durch eine beheizte Kapillare, deren Temperaturverteilung sich in Abhängigkeit von der Durchflussmenge ändert. Mittels Eichkurven können sich einstellende Temperaturverteilungen in der Kapillare unter Berücksichtigung der Temperatur und des Druckes des Gases bestimmten Durchflussmengen zugeordnet werden. Zur genauen Bestimmung der Durchflussmenge einer Flüssigkeit eignen sie sich zum einen nicht, weil der Strömungswiderstand in der Kapillarleitung, an der der Durchflussmengensensor angeordnet ist, zu groß ist, so dass bei niedrigen Druckgradienten in der Kapillarleitung aufgrund der hohen Viskosität der Flüssigkeit eine zu geringe Strömungsgeschwindigkeit herrscht. Zum anderen zweigt die Kapillarleitung in den bekannten Geräten für Gase von einer Hauptleitung rechtwinklig ab, was die Durchströmung der Kapillarleitung ebenfalls erschwert. Die Geometrie der Kapillarleitung und die darin herrschenden Strömungsgeschwindigkeiten begrenzen schließlich die Auswahl an Durchflussmengensensoren, die verwendet werden können. Beispielsweise sind Wirbelsensoren bei den bekannten Geräten nicht verwendbar.

Die erfindungsgemäße Ausgestaltung als Rohrleitungsmodul führt zu einer kompakteren Bauform. Die äußere Gestaltung und Dimensionierung des Rohrleitungsmoduls richtet sich vorzugsweise nach den vom Rohrleitungssystem vorgegebenen Normen. Die leitungsförmige Ausgestaltung ermöglicht insbesondere den nachträglichen Einbau in vorhandene Rohrleitungssysteme. Insbesondere können die Außenabmessungen der Durchflussmengenmessapparatur innerhalb der Außenabmessungen der für das jeweilige Rohrleitungssystem vorgesehenen, normgerechten Armaturen, wie eines Ventils oder Hahnes liegen, so dass die Messapparatur ohne Platzprobleme an nahezu beliebiger Stelle in das Rohrleitungssystem gesetzt werden kann.

Die erfindungsgemäße Lösung kann durch weitere, jeweils für sich vorteilhafte und voneinander unabhängige Ausgestaltungen weiter verbessert werden. Diese im Folgenden dargestellten Ausgestaltungen können beliebig miteinander kombiniert werden, wenn die mit diesen Ausgestaltungen erzielbaren Vorteile in einem konkreten Anwendungsfall benötigt werden.

So kann in einer ersten vorteilhaften Ausgestaltung, die sich durch eine besonders einfache konstruktive Umsetzung auszeichnet, das Rohrleitungsmodul eine in den ersten und zweiten Flüssigkeitskanal unterteilte Flüssigkeitslehung aufweisen.

Ferner können erster und zweiter Flüssigkeitskanal durch eine Trennwand voneinander getrennt sein, was ebenfalls den Fertigungsaufwand verringert, da nicht, wie aus den Durchflussmengenmessapparaturen für Gase bekannt, zwei unterschiedliche Leitungen verwendet werden müssen.

Das Verhältnis der Strömungsquerschnitte der beiden Flüssigkeitskanäle kann beliebig gewählt werden solange eine korrekte Durchströmung des zweiten Flüssigkeitskanals gewährleistet und gleichzeitig der gesamte Strömungswiderstand der Durchflussmengenmessapparatur gering gehalten ist. Insbesondere kann jedoch das Verhältnis der Strömungsquerschnitte so gewählt sein, dass wenigstens im zweiten Flüssigkeitskanal, vorzugsweise in beiden Flüssigkeitskanälen, der Strömungszustand über den gesamten Messbereich des Durchflussmengensensors unverändert laminar oder turbulent bleibt. Dies erhöht die Messgenauigkeit und vermeidet Hystereseeffekte, die bei einem Umschlagen der Strömung von laminaren in den turbulenten Strömungszustand mit steigender Durchströmungsgeschwindigkeit und einer Relaminisierung der Strömung mit sinkender Strömung auftreten.

An der unteren Grenze des Messbereichs des Durchflussmengensensors sollte insbesondere bei der Verwendung eines Wirbelsensors eine turbulente Strömung im zweiten Flüssigkeitskanal herrschen, um die Genauigkeit dieses Sensortyps auszunutzen. Eine turbulente Strömung an der unteren Messbereichsgrenze kann sichergestellt werden, wenn der Durchmesser des zweiten Flüssigkeitskanals so bemessen ist, dass die mit dem Durchmesser des zweiten Flüssigkeitskanals die Durchströmungsgeschwindigkeit an der unteren Messbereichsgrenze und der kinematischen Viskosität der Flüssigkeit gebildete Reynoldszahl wenigstens 2.300 beträgt.

Um die Baulänge des Rohrleitungsmoduls kurz zu halten, können sich die beiden Flüssigkeitskanäle von einem Einlass zu einem Auslass des Rohrleitungsmoduls erstrecken. Bei dieser Ausgestaltung befindet sich der Übergang zwischen der Strömung im Rohrleitungssystem und der Strömung an den Flüssigkeitskanälen möglichst weit vom Durchflussmengensensor entfernt am Einlass, so dass sich bis zur Messstelle wieder eine Rohrströmung einstellen kann.

Bei den Teilströmen durch die Flüssigkeitskanäle handelt es sich insbesondere um nichtkapillare Strömungen; die Strömungsquerschnitte der Flüssigkeitskanäle sind vorzugsweise größer als Kapillarquerschnitte. Eine Kapillarströmung entsteht bei einem Kapillardurchmesser, der um wenigstens eine Größenordnung kleiner als die Länge des betreffenden Kanals ist. Die bei derartigen Strömungsverhältnissen entstehenden Kapillarströmungen zeichnen sich durch besondere Gesetzmäßigkeiten aus, die bei nicht-kapillaren Strömungen, in denen sich im Gegensatz zu Kapillarströmungen beispielsweise Grenzschichten an den Wänden ausbilden, nicht gelten.

Aufgrund der nicht-kapillaren Durchströmung des zweiten Flüssigkeitskanals ist es von Vorteil, wenn sich einer der Flüssigkeitskanäle, vorzugsweise ist dies wenigstens der erste Flüssigkeitskanal, knickfrei vom Einlass zum Auslass erstreckt, um unerwünschtes Strömungsverhalten in Form von Abströmungen und Wirbelbildung und hohe Strömungswiderstände zu vermeiden. Insbesondere durch eine geradlinige Ausgestaltung wenigstens eines ersten Flüssigkeftskanals, vorzugsweise beider Flüssigkeitskanäle, lassen sich diese Probleme am einfachsten vermeiden, gleichzeitig wird der Druckverlust über die Durchflussmengenmessapparatur so gering wie möglich gehalten.

Die Flüssigkeitskanäle können ferner vom Einlass zum Auslass parallel zueinander verlaufen.

Der erste und der zweite Flüssigkeitskanal können ferner in einem gemeinsamen Gehäuse angeordnet sein und insbesondere in ein Gussteil integriert sein, so dass die Fertigung einfach und unproblematisch ist.

Der Durchflussmengensensor kann in einem senkrecht zum zweiten Flüssigkeitskanal verlaufenden Schacht angeordnet sein. Der Schacht befindet sich in einem ausreichenden Abstand zum Einlass, vorzugsweise etwa in der Mitte des zweiten Flüssigkeitskanals, um eine von den transienten Strömungsverhältnissen am Ein- und Auslass weitgehend unbeeinflusste Messpositionen zu gewährleisten.

In einem oder beiden der Flüssigkeitskanäle können Widerstandselemente eingesetzt sein, damit die Durchflussmenge im zweiten Flüssigkeitskanal einfach an den Messbereich des Durchflussmengensensors angepasst werden kann und somit der Messbereich der Gesamtapparatur variabel gestaltet werden kann.

Als Durchflussmengensensor kommt insbesondere ein Wirbelsensor in Betracht, bei dem die Durchflussmenge in Abhängigkeit von wenigstens einer Wirbelstraße ermittelt wird, die sich an wenigstens einem in die Strömung ragenden Ablösekörper ausbildet.

An jedem Flüssigkeitskanal kann gemäß einer weiteren vorteilhaften Ausführungsform eine Aufnahme für einen Durchflussmengensensor vorgesehen sein, so dass je nach verwendetem Sensor der größere oder kleinere Flüssigkeitskanal für die Messung verwendet werden kann.

Die Apparatur in einer der obigen Ausgestaltungen kann auch zur Erfassung des Volumenstroms von Mehrphasenströmungen, Aerosolen und Gasen verwendet werden.

Die Erfindung betrifft schließlich auch die Verwendung einer Durchflussmengenmessapparatur mit einer Hauptleitung und einer Messleitung und einem in der Messleitung angeordneten Sensor zur Erfassung der Durchflussmenge einer durch Haupt- und Messleitung strömenden Flüssigkeit. Eine solche Apparatur ist, wie oben ausgeführt, zur Messung der Durchflussmengen von Gasen bekannt. Die Hauptleitung entspricht hierbei dem ersten Flüssigkeitskanal, die Messleitung dem zweiten Flüssigkeitskanal.

Selbstverständlich können auch mehr als zwei Flüssigkeitskanäle vorgesehen sein, obwohl dies den konstruktiven Aufwand erhöht und unter Umständen zu erhöhtem Druckverlust führt. Jedem Kanal oder einem Teil der Flüssigkeitskanäle kann eine Aufnahme für einen Durchflussmengensensor zugeordnet sein.

Die Zuordnung der vom Durchflusssensor ermittelten Werte zu einer Durchflussmenge, d.h. Volumen- oder Massenstrom, kann durch Vergleich mit beispielsweise empirisch ermittelten, gespeicherten Werten aus Eichkurven erfolgen.

Im Folgenden ist die Erfindung anhand eines Ausführungsbeispiels mit Bezug auf die Zeichnungen beispielhaft näher erläutert. Einzelne, im nachstehend beschriebenen Ausführungsbeispiel vorhandenen Merkmale können weggelassen oder durch andere Merkmale ersetzt oder ergänzt werden, wie sich aus den voranstehenden Ausführungen zu den vorteilhaften Ausgestaltungen ergibt.

Es zeigen:
Fig. 1 eine Ausführungsform der erfindungsgemäßen Durchftussmengenmessapparatur in einer schematischen Schnittdarstellung entlang einer Längsachse;
Fig. 2 eine schematische Darstellung des Durchflussmengensensors der Fig. 1 in einer schematischen Perspektivdarstellung, wobei ein Durchflussmengensensor in einer schematischen Explosionsdarstellung ebenfalls perspektivisch gezeigt ist.

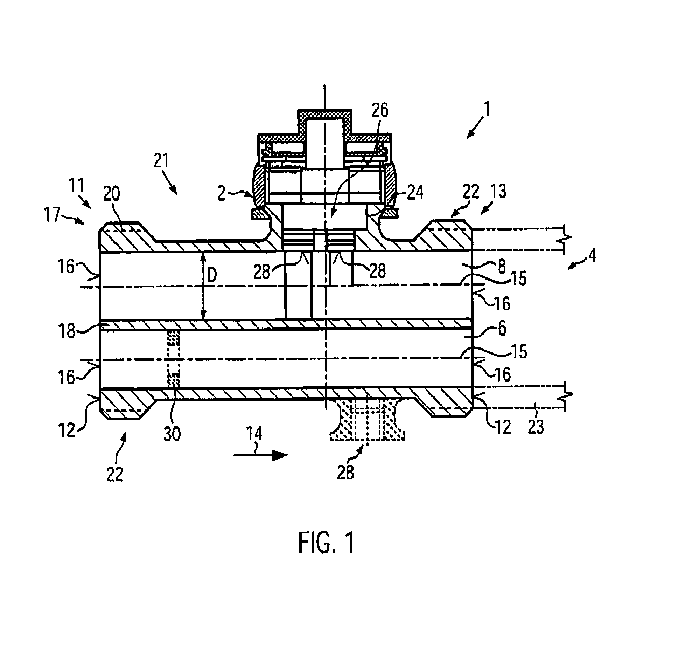

Der Aufbau einer erfindungsgemäßen Durchflussmengenmessapparatur 1 für Flüssigkeiten ist zunächst anhand der Fig. 1 erläutert.

Die Durchflussmengenmessapparatur 1 weist einen Durchflussmengensensor 2 und wenigstens zwei Flüssigkeitskanäle 4, insbesondere einen ersten Flüssigkeitskanal 6 und einen zweiten Flüssigkeitskanal 8 auf. Die Flüssigkeitskanäle 4 erstrecken sich von einem Einlass 10 am einen Ende 11 der Durchflussarmatur 1 zu einem Auslass 12 am anderen Ende 13. Die Durchflussmengenmessapparatur 1 wird in einer Durchströmungsrichtung 14 vom Einlass 10 in Richtung Auslass 12 durchströmt. Die Durchströmungsrichtung 14 folgt dem Verlauf der Mittenlinien 15 der Flüssigkeitskanäle 4. Vorzugsweise erstrecken sich die Flüssigkeitskanäle 4 geradlinig und parallel vom Einlass 10 zum Auslass 12.

Wie Fig. 1 beispielhaft zeigt, weist jeder Flüssigkeitskanal 6, 8 eine separate Öffnung im Bereich des Einlasses 10 bzw. Auslasses 12 auf. Sie entstehen beispielsweise durch Unterteilung einer Flüssigkeitsleitung 17. Die Flüssigkeitskanäle 4 können durch eine Trennwand 18 voneinander getrennt sein.

Der Durchflussmengensensor 2 kann auf unterschiedliche Weise funktionieren und beispielsweise als Wirbelsensor, Dopplersensor oder ähnliches aufgebaut sein.

Die Flüssigkeitskanäle 4 sind in einem gemeinsamen Gehäuse 20, das, wie Fig. 1 beispielhaft zeigt, in Form eines Leitungselements bzw. Rohrleitungsmoduls 21 ausgebildet ist.

Am Einlass 10 und am Auslass 12 bzw. den Enden 11, 13 weist das Gehäuse 20 Verbindungselemente 22 zur Verbindung mit einem in Fig. 1 lediglich schematisch dargestellten Rohrleitungssystem 23 auf. Die Verbindungselemente 22 können, je nach Anforderung des Rohrleitungssystems, als Flansche oder, wie in Fig. 1 dargestellt, als Außengewinde ausgebildet sein. Die Außenabmessungen des Gehäuses 20 mit dem Durchflussmengensensor 2 übersteigen beispielsweise nicht die Außenabmessungen eines Ventils für das Rohrleitungssystem 23, in das das Gehäuse 20 einbaubar ist.

Die Trennwand 18 ist vorzugsweise einteilig und stoffschlüssig mit dem Gehäuse 20 ausgeformt. Insbesondere können die Trennwand 18 und das Gehäuse 20 als ein integrales Gussteil ausgebildet sein.

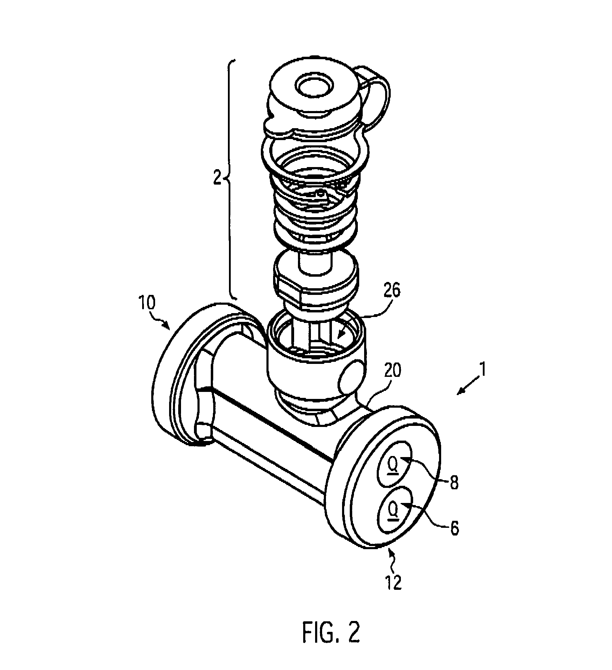

Die Flüssigkeitskanäle können in Abhängigkeit von dem im Betrieb der Durchflussmengenmessapparatur 1 auftretende Durchflussmengen und dem Messbereich des Durchflussmengensensors 2 einen unterschiedlichen oder, wie in Fig. 1 dargestellt, identischen Strömungsquerschnitt Q (Fig. 2) aufweisen. Der Strömungsquerschnitt Q ist über die Länge des jeweiligen Flüssigkeitskanals 6, 8 vorzugsweise konstant. Bei sich über die Länge des Flüssigkeitskanals ändernden Strömungsquerschnitt Q ist der kleinste Strömungsquerschnitt maßgeblich.

Der Strömungsquerschnitt Q bzw. Durchmesser D des zweiten Flüssigkeitskanals ist vorzugsweise so gewählt, dass in einem vom Durchflussmengensensor 2 erfassten Messvolumen ein sich über den gesamten Messbereich nicht ändernder, insbesondere turbulenter Strömungszustand vorliegt. Dies kann beispielsweise dadurch erreicht werden, dass die mit dem Durchmesser D, der kinematischen Viskosität der Flüssigkeit und mit der Strömungsgeschwindigkeit im zweiten Flüssigkeitskanal an der unteren Messbereichsgrenze gebildete Reynoldszahl wenigstens 2.300 beträgt.

Der Durchflussmengensensor 2 ist in einer vom Rohrleitungsmodul 21 ausgebildeten Auf nahme 24 aufgenommen, z.B. flüssigkeitsdicht eingeschraubt oder festgeklemmt. Die Auf nahme 24 ist als ein im Wesentlichen senkrecht zum zweiten Flüssigkeitskanal 8 verlaufender Schacht 26, der sich in einer Verbindungsöffnung 28 oder mehreren Verbindungsöffnungen 28, z.B. für den Einbau eines als Wirbelsensor ausgebildeten Durchflussmengensensors 2, bis in den Flüssigkeitskanal 8 erstrecken kann. Die Aufnahme 24 ist dem zweiten Flüssigkeitskanal 8 zugeordnet, so dass an diesem der Durchflussmengensensor 2 angebracht ist und die Durchflussmenge an Flüssigkeit, also deren Volumen, und/oder Massenstrom, durch diesen Flüssigkeitskanal erfasst werden kann.

Alternativ oder zusätzlich zur Aufnahme 24 kann eine weitere Aufnahme 28 am anderen, ersten Flüssigkeitskanal 6 vorgesehen sein. Ferner kann in einem oder beiden Flüssigkeitskanälen, beispielsweise nach Fig. 1 dem ersten Flüssigkeitskanal, ein Widerstandselement 30 angeordnet sein, das zu einem vorbestimmten Strömungswiderstand und Druckabfall im betreffenden Flüssigkeitskanal bzw. einer vorbestimmten Durchflussmenge führt. In Fig. 1 ist als Widerstandselement 30 lediglich beispielhaft eine Blende gezeigt. Das Widerstandselement 30 kann auch einen variablen, von Hand oder sich automatisch in Abhängigkeit von der Strömungsgeschwindigkeit oder dem Druckgradienten einstellbaren Strömungswiderstand aufweisen. Durch den Einsatz eines solchen Widerstandselements 30 lassen sich bei vorgegebener Geometrie der Flüssigkeitskanäle 6, 8 die relativen Durchflussmengen einstellen und genau an den Messbereich des Durchflussmengensensors 2 anpassen.

Die Durchflussmengenmessapparatur 1 der Fig. 1 funktioniert wie folgt:

Die am Einlass 10 ankommende Flüssigkeitsmenge wird in zwei Teilströme aufgeteilt, die durch die Flüssigkeitskanäle 6, 8 geleitet werden. Die Durchflussmengen durch die Flüssigkeitskanäle 4 verteilen sich in Abhängigkeit vom Durchflusswiderstand des jeweiligen Flüssigkeitskanals: Je geringer der Durchflusswiderstand ist, um so mehr Flüssigkeit strömt durch diesen Flüssigkeitskanal. Der Durchflusswiderstand sinkt mit dem Strömungsquerschnitt Q des Flüssigkeitskanals und kann durch Widerstandselemente 30 zusätzlich erhöht werden.

Der Durchflussmengensensor 2 erfasst die Durchflussmenge an Flüssigkeit in dem ihm zugeordneten Flüssigkeitskanal 8 direkt oder indirekt beispielsweise über die Erfassung eines geschwindigkeitsabhängigen Strömungsparameters oder der Strömungsgeschwindigkeit. Die Durchflussmenge durch diesen Flüssigkeitskanal 8 ist geringer als die durch alle Flüssigkeitskanäle 4 strömende Gesamtdurchflussmenge. Folglich kann ein Durchflussmengensensor 2 verwendet werden, dessen Messbereich kleiner ist, als dies die durch sämtliche Flüssigkeitskanäle 4 strömende Gesamtdurchflussmenge erfordert. Der Messbereich muss lediglich die größte im Betrieb auftretende Durchflussmenge, ggf. einschließlich eines Sicherheitszuschlages durch den Flüssigkeitskanal 8, erfassen. Diese Durchflussmenge kann durch die Wahl des Verhältnisses der Strömungsquerschnitte der Flüssigkeitskanäle 4 und ggf. den Einbau von Widerstandselementen 30 an dem vorbestimmten Messbereich des Durchflussmengensensors 2 angepasst werden.

Fig. 2 zeigt eine perspektivische Ansicht der Durchflussmengenmessapparatur 1 der Fig. 1. Es ist zu erkennen, dass die Flüssigkeitskanäle 6, 8 parallel zueinander verlaufen und einen kreisförmigen Querschnitt aufweisen können. Die Flüssigkeitskanäle 6, 8 sind mit dem Gehäuse 20 als Rohrleitungsmodul ausgestaltet, wie oben bereits ausgeführt ist.

Das beschriebene Ausführungsbeispiel ist für Rohrleitungssysteme mit Nennweiten zwischen 6 und 80 mm geeignet und kann insbesondere im Bereich der Gebäudewasserversorgung eingesetzt werden.

## Patentansprüche

1. Durchflussmengenmessapparatur (1) mit einem Durchflussmengensensor (2), **dadurch gekennzeichnet, dass** wenigstens ein erster Flüssigkeitskanal (6) und wenigstens ein zweiter Flüssigkeitskanal (8), an dem der Durchflussmengensensor (2) angebracht ist, zu einem Rohrleitungsmodul (21) zusammengefasst sind.

2. Durchflussmengenmessapparatur (1) nach Anspruch 1, **dadurch gekennzeichnet, dass** die Strömungsquerschnitte (Q) der Flüssigkeitskanäle (6, 8) größer sind als ein Kapillarquerschnitt.

3. Durchflussmengenmessapparatur (1) nach Anspruch 1 oder 2, **dadurch gekennzeichnet, dass** das Rohrleitungsmodul (21) eine in den ersten und zweiten Flüssigkeitskanal (6, 8) unterteilte Flüssigkeitsleitung (17) aufweist.

4. Durchflussmengenmessapparatur (1) nach einem der Ansprüche 1 bis 3, **dadurch gekennzeichnet, dass** der erste und der zweite Flüssigkeitskanal (6, 8) durch eine Trennwand (18) voneinander getrennt sind.

5. Durchflussmengenmessapparatur (1) nach einem der Ansprüche 1 bis 4, **dadurch gekennzeichnet, dass** sich der erste Flüssigkeitskanal (6) und der zweite Flüssigkeitskanal (8) von einem Einlass (10) bis zu einem Auslass (12) des Rohrleitungsmoduls (21) erstrecken.

6. Durchflussmengenmessapparatur (1) nach einem der Ansprüche 1 bis 5, **dadurch gekennzeichnet, dass** der erste und der zweite Flüssigkeitskanal (6, 8) sich knickfrei vom Einlass (10) zum Auslass (12) erstrecken.

7. Durchflussmengenmessapparatur (1) nach einem der Ansprüche 1 bis 6, **dadurch gekennzeichnet, dass** der erste und der zweite Flüssigkeitskanal (6, 8) sich parallel zueinander vom Einlass (10) zum Auslass (12) erstrecken.

8. Durchflussmengenmessapparatur (1) nach einem der Ansprüche 1 bis 7, **dadurch gekennzeichnet, dass** der erste und der zweite Flüssigkeitskanal (6, 8) in einem gemeinsamen Gehäuse (20) angeordnet sind.

9. Durchflussmengenmessapparatur (1) nach einem der Ansprüche 1 bis 8, **dadurch gekennzeichnet, dass** der erste und der zweite Flüssigkeitskanal (6, 8) in ein einteiliges Gehäuse (20) integriert sind.

10. Durchflussmengenmessapparatur (1) nach einem der Ansprüche 1 bis 9, **dadurch gekennzeichnet, dass** der erste und/oder der zweite Flüssigkeitskanal (6, 8) mit wenigstens einem Widerstandselement (30) versehen ist, durch das der Durchflusswiderstand des das Widerstandselement (30) aufnehmenden Flüssigkeitskanal (6, 8) erhöht ist.

11. Verwendung einer Durchflussmengenmessapparatur (1) mit einer Hauptleitung (6) und einer Messleitung (8) und einem der Messleitung (8) zugeordneten Durchflussmengensensor (2) zur Erfassung der Durchflussmenge einer durch Haupt- und Messleitung strömenden Flüssigkeit.

12. Verfahren zum Erfassen der Durchflussmenge eines Flüssigkeitsstroms mittels einer Durchflussmengenmessapparatur (1),bei dem der Flüssigkeitsstrom in wenigstens zwei Teilströme unterteilt und die Durchflussmenge eines Teilstroms bestimmt wird.

13. Verfahren nach Anspruch 12, wobei die Teilströme keine Kapillarströmungen sind.

14. Verfahren nach Anspruch 12 oder 13, wobei die Durchflussmenge des Flüssigkeitsstroms durch Vergleich der gemessenen Durchflussmenge des Teilstromes mit einem vorab gespeicherten Wert bestimmt wird.
